# EUROPEAN PATENT SPECIFICATION

(11) **EP 3 407 407 B1**
(45) Date of publication and mention of the grant of the patent: **20.08.2025**
(21) Application number: 16886222.5
(22) Date of filing: 29.11.2016
(51) Int. Cl.: H01M 4/48, H01M 4/36, H01M 4/13, H01M 4/583, H01M 4/62, H01M 10/0525

(54) **NEGATIVE ELECTRODE ACTIVE MATERIAL, MIXED NEGATIVE ELECTRODE ACTIVE MATERIAL, NONAQUEOUS ELECTROLYTE SECONDARY BATTERY, METHOD FOR PRODUCING NEGATIVE ELECTRODE ACTIVE MATERIAL, AND METHOD FOR MANUFACTURING NONAQUEOUS ELECTROLYTE SECONDARY BATTERY**
NEGATIVELEKTRODENAKTIVMATERIAL, GEMISCHTES NEGATIVELEKTRODENAKTIVMATERIAL, SEKUNDÄRBATTERIE MIT WASSERFREIEM ELEKTROLYT, VERFAHREN ZUR HERSTELLUNG EINES NEGATIVELEKTRODENAKTIVMATERIAL UND VERFAHREN ZUR HERSTELLUNG EINER SEKUNDÄRBATTERIE MIT WASSERFREIEM ELEKTROLYT
MATÉRIAU ACTIF D'ÉLECTRODE NÉGATIVE, MATÉRIAU ACTIF D'ÉLECTRODE NÉGATIVE MIXTE, BATTERIE SECONDAIRE À ÉLECTROLYTE NON AQUEUX, PROCÉDÉ DE PRODUCTION DE MATÉRIAU ACTIF D'ÉLECTRODE NÉGATIVE, ET PROCÉDÉ DE FABRICATION DE BATTERIE SECONDAIRE À ÉLECTROLYTE NON AQUEUX

(30) Priority: 21.01.2016 JP 2016009434
(43) Date of publication of application: 28.11.2018
(73) Proprietor: Shin-Etsu Chemical Co., Ltd., Tokyo 100-0005 (JP)
(72) Inventor: HIROSE, Takakazu, Annaka-shi Gunma 379-0224 (JP); KAMO, Hiromichi, Annaka-shi Gunma 379-0224 (JP); FURUYA, Masahiro, Annaka-shi Gunma 379-0224 (JP); MATSUNO, Takumi, Annaka-shi Gunma 379-0224 (JP)
(74) Representative: Wibbelmann, Jobst
(86) International application number: PCT/JP2016/004987
(87) International publication number: WO 2017/125977

(56) References cited:
- WO-A1-2015/025443
- JP-A- 2005 231 957
- JP-A- 2007 290 919
- JP-A- 2009 076 372
- JP-A- 2011 142 021
- US-A1- 2007 254 102
- US-A1- 2015 221 950
- US-A1- 2016 233 484

## Description

### TECHNICAL FIELD

The present invention relates to a method for producing a negative electrode active material and a method for producing non-aqueous electrolyte secondary battery.

### BACKGROUND ART

In recent years, mobile devices have been improved to be high performance and multifunctionalization, and accompanying with these, secondary batteries used as power sources for mobile devices have been also required to be smaller, lighter and thinner, and increase in capacity thereof has been demanded.

As a secondary battery capable of responding to this requirement, there is a lithium ion secondary battery. Battery characteristics of the lithium ion secondary battery are greatly changed depending on the electrode active material to be used and the like. In the representative lithium ion secondary battery currently in practical use, lithium cobaltate is used as a positive electrode active material and graphite is used as a negative electrode active material. However, battery capacity of the lithium ion secondary battery thus constituted is approaching the theoretical capacity and it is difficult to significantly increase the capacity by future improvement.

Thus, it has been investigated to realize a remarkably high capacity of a lithium ion secondary battery by using silicon, tin or the like which can form an alloy with lithium at the time of charging as a negative electrode active material. However, when silicon, tin or the like is used as a negative electrode active material, the degree of expansion and contraction accompanying charging and discharging is large, so that there are problems that the active material is finely pulverized due to expansion and shrinkage accompanying charging and discharging, or falls off from a negative electrode current collector, whereby cycle characteristics are lowered.

To the contrary, in recent years, in order to improve cycle characteristics, conductivity is provided by using silicon oxide and a carbon film is formed on the surface layer thereof (for example, see Patent Document 1). In Patent Document 1, with regard to the shift value obtained from the RAMAN spectrum relating to the carbon coating, broad peaks appear at 1,330 cm⁻¹ and 1,580 cm⁻¹, and their intensity ratio I₁₃₃₀/I₁₅₈₀ is 1.5<I₁₃₃₀/I₁₅₅₀<3.

Also, in order to improve high battery capacity and cycle characteristics, particles having a silicon microcrystalline phase dispersed in silicon dioxide are used (for example, see Patent Document 2). Further, in order to improve overcharge and overdischarge characteristics, silicon oxide whose ratio of atomic number of silicon and oxygen is controlled to 1:y (0<y<2) is used (for example, see Patent Document 3). Moreover, in order to obtain high battery capacity and improve cycle characteristics, a mixed electrode of silicon and carbon is produced and the silicon ratio is designed to be 5% by mass or more and 13% by mass or less (for example, see Patent Document 4).

### CITATION LIST

### PATENT LITERATURE

Patent Document 1: Japanese Patent Laid-Open Publication No. 2009-212074
Patent Document 2: Japanese Patent Laid-Open Publication No. 2009-205950
Patent Document 3: Japanese Patent No. 2,997,741
Patent Document 4: Japanese Patent Laid-Open Publication No. 2010-092830

### SUMMARY OF INVENTION

### TECHNICAL PROBLEM

In recent years, miniaturized mobile devices represented by electronic devices have been progressed to improve in high performance and multifunctionalization, and increase in battery capacity is required for lithium ion secondary batteries, which is the main power source thereof. As one of means to solve the problem, development of a lithium ion secondary battery comprising a negative electrode using a silicon material as a main material has been desired. In addition, the lithium ion secondary battery using the silicon material has been desired to have the cycle characteristics similar to those of a lithium ion secondary battery using a carbon material. However, it has not yet been reached to propose a negative electrode active material having cycle stability equivalent to that of a lithium ion secondary battery using a carbon material.

In addition, the silicon oxide (SiOₓ) having cycle characteristics close to that of the carbon material tended to be inferior in battery capacity, particularly in discharge capacity (reversible capacity) (mAh/g) as compared with those of silicon. For example, it has been known that silicon oxide has good cycle characteristics when the ratio of Si:O is about 1:1, but the discharge capacity of the silicon oxide where the ratio of Si:O is about 1:1 (that is, "x" is about 1) is much lower than the discharge capacity of the silicon simple substance (about 3,350 mAh/g). In this case, this is because such silicon oxide contains a large amount of oxygen (in particular, a silicon dioxide component which does not release Li or difficultly release Li after storing Li).

As a method of producing silicon oxide capable of improving battery capacity such as discharge capacity and the like and cycle characteristics when it is used as a negative electrode active material of the secondary battery, it can be considered a method in which the ratio of silicon to oxygen in the silicon oxide is made higher than the above case.

Here, the silicon oxide can be obtained by mixing metal silicon powder and silicon dioxide powder, sublimating a silicon oxide gas (oxidized silicon gas) from the contact interface between the metal silicon and the silicon dioxide, solidifying the gas on an adsorption plate and depositing. In this method, the silicon oxide gas is generated only from the above contact interface, so that the formulation ratio of the metal silicon and the silicon dioxide is desired to be about 1:1. In this case, the produced silicon oxide has a value of "x" in the vicinity of 1 to 1.2. Accordingly, it is difficult only by this method to increase the ratio of silicon in the silicon oxide gas or to increase the ratio of silicon in the obtained silicon oxide (for example, the above "x" is made less than 1).

As a method of producing silicon oxide having the above "x" of less than 1, there may be considered a method in which SiO₂ and Si are co-deposited so that the ratio of Si at that time is made large, and a method in which Si is oxidized and silicon oxide where the "x" is less than 1 is produced as a composite of Si and SiO₂. However, even if silicon oxide having the "x" of less than 1 is produced by these methods, these silicon oxides contain a large amount of silicon dioxide component which does not release or difficultly release Li after storing Li, and accordingly, discharge capacity thereof is small.

In addition, as a method for producing silicon oxide where "x" is less than 1, there may be considered a method in which silicon oxide having "x" of 1 or more is previously produced, and the product is subjected to a post-treatment to produce silicon oxide having "x" of less than 1. As the post-treatment thereof, there may be considered a method in which silicon oxide having "x" of 1 or more is reduced by subjecting to heat treatment under a reducing gas atmosphere, and a method in which silicon oxide having "x" of 1 or more is reduced by immersing in a hydrofluoric acid solution. However, even if the silicon oxide particles after precipitation and pulverization are subjected to heat treatment using a reducing gas or immersed in a hydrofluoric acid solution, the surface layer portion alone of the silicon oxide particles is reduced, and it is difficult to change the composition of the whole silicon oxide particles. Accordingly, even when these methods are used, only those having a small discharge capacity can be obtained.

In addition, each of the silicon oxide obtained by the above methods has a large ratio of Li that cannot be desorbed among the Li inserted into the particles of silicon oxide at the first time charging, that is, these are materials having low initial charge and discharge characteristics (for example, initial efficiency). The reason can be considered that a part of Li inserted into the particles of silicon oxide at the first time charging reacts with silicon in the particles to form a stable Li compound.

The present invention has been made in view of these problems, and an object thereof is to provide a negative electrode active material capable of improving discharge capacity, cycle characteristics and initial charge and discharge characteristics when it is used for a negative electrode active material of the secondary battery, a mixed negative electrode active material containing the negative electrode active material and a non-aqueous electrolyte secondary battery using a negative electrode containing the negative electrode active material or the mixed negative electrode active material. It is also an object thereof to provide a method for producing a negative electrode active material capable of improving discharge capacity, cycle characteristics and initial charge and discharge characteristics when it is used for a negative electrode active material of the secondary battery. It is a further object thereof to provide a method for producing a non-aqueous electrolyte secondary battery using the negative electrode active material produced by the method for producing the negative electrode active material.

### SOLUTION TO PROBLEM

To accomplish the above objects, the present disclosure provides a negative electrode active material which is a negative electrode active material containing particles of negative electrode active material, wherein,
the particles of negative electrode active material contain particles of silicon compound containing a silicon compound (SiOₓ: 0.5≤x<1.0),
the particles of silicon compound contain lithium, and
when the negative electrode active material is used for a negative electrode of a secondary battery having metal lithium as a counter electrode, and 1.2 V constant current discharge is carried out after 0 V constant current and constant voltage charging of the secondary battery, an obtained discharge capacity is 1,550 mAh/g or more and 2,200 mAh/g or less.

Such a negative electrode active material (hereinafter also referred to as a silicon-based active material) is employed, when it is used for a negative electrode active material of a secondary battery, it is possible to improve discharge capacity, cycle characteristics and initial charge and discharge characteristics.

Also, "x" of the SiOₓ is preferably in the range of 0.6≤x≤0.8.

Such a negative electrode active material is employed, when it is used for a negative electrode active material of a secondary battery, it is possible to further improve discharge capacity.

The particles of silicon compound preferably contain one or more kinds selected from Li₂SiO₃ and Li₄SiO₄.

If the particles of silicon compound contain the above Li silicate which is relatively stable as a Li compound, the initial charge and discharge characteristics and cycle characteristics of the negative electrode active material can be improved, and stability to the slurry at the time of producing the electrode is further improved.

In addition, the particles of negative electrode active material preferably contain a carbon material at a surface layer portion.

In this way, by containing the carbon material at the surface layer portion of the particles of negative electrode active material, conductivity is improved, so that battery characteristics can be improved when the negative electrode active material containing such particles of negative electrode active material is used for a negative electrode active material of the secondary battery.

The particles of negative electrode active material preferably have a median diameter of 3.0 µm or more and 12 µm or less.

If the median diameter is 3.0 µm or more, it is possible to suppress increase in the irreversible capacity of the battery due to increase in the surface area per mass. On the other hand, by making the median diameter 12 µm or less, particles become difficultly crack so that a new surface hardly comes out.

In the present disclosure it is provided a mixed negative electrode active material containing the negative electrode active material of the present invention mentioned above and a carbon-based active material.

By containing a carbon-based active material together with the silicon-based active material of the present invention as the materials for forming the layer of negative electrode active material, it is possible to improve conductivity of the layer of negative electrode active material, and to alleviate expansion stress accompanied by charging. Also, by mixing the silicon-based active material with the carbon-based active material, battery capacity can be increased.

In the present disclosure it is also provided a non-aqueous electrolyte secondary battery which comprises a negative electrode containing the negative electrode active material of the present disclosure or a negative electrode containing the mixed negative electrode active material of the present disclosure.

When the non-aqueous electrolyte secondary battery using the negative electrode containing such a negative electrode active material or a mixed negative electrode active material is employed, an electrode having large discharge capacity, and good cycle characteristics and initial charge and discharge characteristics can be obtained.

In the present disclosure it is further provided a method for producing a negative electrode active material which is a method for producing a negative electrode active material containing particles of negative electrode active material which contain particles of silicon compound, which comprises:
generating a silicon oxide gas by heating a raw material which generates a silicon oxide gas,
reacting the silicon oxide gas with a reducing gas,
producing particles of silicon compound containing a silicon compound (SiOₓ: 0.5≤x<1.0) by solidifying and depositing a material obtained by the reaction on an adsorption plate, and
inserting lithium into the particles of silicon compound.

Such a method for producing a negative electrode active material is employed, when it is used for a negative electrode active material of a secondary battery, a negative electrode active material capable of improving discharge capacity, cycle characteristics and initial charge and discharge characteristics can be produced.

In this case, the reducing gas is preferably one or more kinds selected from a CO gas, a H₂S gas, a SO₂ gas and a H₂ gas.

As the above reducing gas, these material can be used.

In the present disclosure it is further provided a method for producing a negative electrode active material which is a method for producing a negative electrode active material containing particles of negative electrode active material which contain particles of silicon compound, which comprises:
separately preparing a container in which a raw material which generates a silicon gas is contained and a container in which a raw material which generates a silicon oxide gas is contained,
generating a silicon gas by heating the raw material which generates a silicon gas,
generating a silicon oxide gas by heating the raw material which generates a silicon oxide gas,
mixing the silicon gas and the silicon oxide gas to obtain a mixed gas,
producing particles of silicon compound containing a silicon compound (SiOₓ: 0.5≤x<1.0) by solidifying and depositing the mixed gas on an adsorption plate, and
inserting lithium into the particles of silicon compound.

When such a method for producing the negative electrode active material is employed, a negative electrode active material capable of improving discharge capacity, cycle characteristics and initial charge and discharge characteristics can be produced when it is used for a negative electrode active material of the secondary battery. In particular, in this method, it is possible to increase a ratio of silicon in the silicon compound more easily, so that a negative electrode active material having a large discharge capacity can be produced more easily.

In this case, it is preferable to make a temperature of the silicon gas higher than that of the silicon oxide gas.

In the case where the container in which a raw material which generates a silicon gas is contained and the container in which a raw material which generates a silicon oxide gas is contained are located in the same chamber, it is necessary to consider the influence of the vapor pressure, so that it is preferable to make the temperature of the silicon gas higher than that of the silicon oxide gas.

It is also preferable to set a heating temperature at the time of heating the raw material which generates the silicon oxide gas to a temperature range of 900°C to 1,700°C.

By heating the raw material which generates the silicon oxide gas with such a heating temperature, the silicon oxide gas can be generated easily.

In the present disclosure it is further provided a method for producing a negative electrode active material which is a method for producing a negative electrode active material containing particles of negative electrode active material which contain particles of a silicon compound, which comprises:
preparing a container in which silicon has been contained,
melting the silicon contained in the container to form a silicon melt,
generating a mixed gas in which a silicon gas and a silicon oxide gas are mixed by introducing a raw material which generates a silicon oxide gas into the silicon melt,
producing particles of silicon compound containing a silicon compound (SiOₓ: 0.5≤x<1.0) by solidifying and depositing the mixed gas on an adsorption plate, and
inserting lithium into the particles of silicon compound.

When such a method for producing a negative electrode active material is employed, it is possible to produce a negative electrode active material capable of improving discharge capacity, cycle characteristics and initial charge and discharge characteristics when it is used for a negative electrode active material of the secondary battery. In particular, in this method, by introducing a raw material which generates a silicon oxide gas into the silicon melt, it is possible to industrially generate a gas in one container, whereby productivity can be improved.

It is also preferable to generate the silicon oxide gas in the presence of an inert gas or under reduced pressure.

When such a method for producing a negative electrode active material is employed, side reactions and the like can be suppressed.

According to the method for producing the negative electrode active material of the present disclosure mentioned above, it is also preferable to produce a negative electrode active material having a discharge capacity of 1,550 mAh/g or more and 2,200 mAh/g or less, which is obtained by using the negative electrode active material for a negative electrode of a secondary battery having metal lithium as a counter electrode, and subjecting to 1.2 V constant current discharge after 0 V constant current and constant voltage charging of the secondary battery.

When such a method for producing the negative electrode active material of the present invention is employed, a negative electrode active material having such discharge capacity can be produced.

In the present disclosure it is further provided a method for producing a non-aqueous electrolyte secondary battery which comprises producing a negative electrode by using the negative electrode active material produced by the method for producing the negative electrode active material of the present invention mentioned above, and producing a non-aqueous electrolyte secondary battery using the produced negative electrode.

This producing method can produce a non-aqueous electrolyte secondary battery having a large discharge capacity, and good cycle characteristics and initial charge and discharge characteristics by using the negative electrode active material produced by the method for producing the negative electrode active material of the present invention mentioned above.

### ADVANTAGEOUS EFFECTS OF INVENTION

The negative electrode active material of the present disclosure is capable of improving discharge capacity, cycle characteristics and initial charge and discharge characteristics when it is used for a negative electrode active material of the secondary battery. In addition, the same effects can be obtained in the non-aqueous electrolyte secondary battery using the mixed negative electrode active material which contains the negative electrode active material, and the negative electrode containing the negative electrode active material or the mixed negative electrode active material.

Also, according to the method for producing the negative electrode active material of the present disclosure it is possible to produce a negative electrode active material capable of improving battery capacity, cycle characteristics and initial charge and discharge characteristics when it is used for a negative electrode active material of the secondary battery.

### BRIEF DESCRIPTION OF DRAWINGS

Fig. 1 is a flow chart showing an example of a method for producing a negative electrode active material of the present disclosure;
Fig. 2 is a flow chart showing another example of a method for producing a negative electrode active material of the present disclosure;
Fig. 3 is a flow chart showing another example of a method for producing a negative electrode active material of the present disclosure;
Fig. 4 is a schematic view showing one example of a producing apparatus of a negative electrode active material which can be used in the method for producing a negative electrode active material of the present disclosure;
Fig. 5 is a schematic view showing another example of a producing apparatus of a negative electrode active material which can be used in the method for producing a negative electrode active material of the present disclosure;
Fig. 6 is a schematic view showing another example of a producing apparatus of a negative electrode active material which can be used in the method for producing a negative electrode active material of the present disclosure;
Fig. 7 is a cross-sectional view showing one example of a constitution of a negative electrode containing a negative electrode active material of the present disclosure;
Fig. 8 is an exploded view showing one example of the constitution (laminate film type) of a nonaqueous electrolyte secondary battery of the present disclosure; and
Fig. 9 is a schematic drawing showing one example of an electrochemical Li-doped reformer that can be used in the method for producing a negative electrode active material of the present disclosure.

### DESCRIPTION OF EMBODIMENTS

In the following, the present invention is explained in more detail.

As mentioned above, it has been demanded to develop a negative electrode active material capable of improving discharge capacity, cycle characteristics and initial charge and discharge characteristics when it is used for a negative electrode active material of a secondary battery. However, there is a problem that it is impossible to obtain a negative electrode active material having a large discharge capacity merely by lowering the value of "x" of SiOₓ.

Thus, the present inventors have intensively studied to obtain a negative electrode active material capable of improving discharge capacity, cycle characteristics and initial charge and discharge characteristics when it is used for a negative electrode active material of the secondary battery, and reached the present disclosure.

The negative electrode active material of the present disclosure contains particles of negative electrode active material. The particles of negative electrode active material contain particles of silicon compound (hereinafter also referred to as particles of silicon oxide) which contain a silicon compound (SiOₓ: 0.5≤x<1.0) (hereinafter also referred to as silicon oxide). The particles of silicon compound also contain lithium. Also, when the negative electrode active material is used for a negative electrode of a secondary battery having metal lithium as a counter electrode, and when 1.2 V constant current discharge is carried out after 0 V constant current and constant voltage charging of the secondary battery, an obtained discharge capacity (hereinafter also referred to as discharge capacity in the battery evaluation using a counter electrode Li) is 1,550 mAh/g or more and 2,200 mAh/g or less.

The negative electrode active material of the present invention is improved in a ratio of silicon in silicon oxide (SiOₓ: 0.5≤x<1.0), so that battery capacity can be also improved while maintaining cycle characteristics when it is used for a negative electrode active material of the secondary battery. Also, the negative electrode active material of the present disclosure can reduce irreversible capacity generating at the time of charging since the particles of silicon compound contain lithium, and battery efficiency of the secondary battery such as initial charge and discharge characteristics and the like can be improved. Further, the negative electrode active material of the present disclosure has the discharge capacity in the battery evaluation using a counter electrode Li (first time discharge capacity) in the range, it is possible to improve discharge capacity when the negative electrode active material is used for an actual negative electrode active material of the secondary battery.

In the following, embodiments of the present invention will be specifically described with reference to the drawings, but the present invention is not limited thereto.

### <Negative electrode for non-aqueous electrolyte secondary battery>

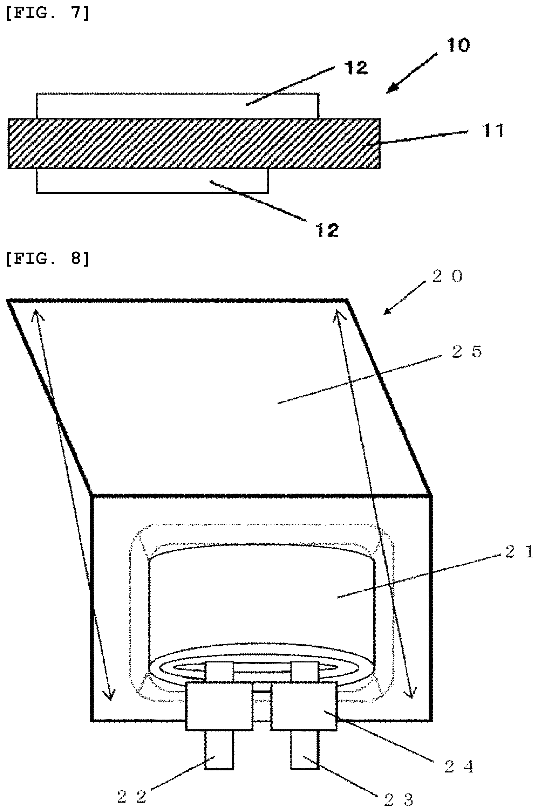

First, the negative electrode for the non-aqueous electrolyte secondary battery is explained. Fig. 7 is a cross-sectional view showing one example of a constitution of a negative electrode (negative electrode for non-aqueous electrolyte secondary battery) containing a negative electrode active material of the present disclosure.

### [Constitution of negative electrode]

As shown in Fig. 7, a negative electrode 10 is configured to have a layer of negative electrode active material 12 on a negative electrode current collector 11. In addition, the layer of negative electrode active material 12 may be provided on both sides, or, only on one side of the negative electrode current collector 11. Further, as long as the negative electrode active material of the present invention is used, the negative electrode current collector 11 may be omitted.

### [Negative electrode current collector]

The negative electrode current collector 11 is constituted by an excellent conductive material, and a material excellent in mechanical strength. Examples of the conductive material that can be used for the negative electrode current collector 11 may be mentioned, for example, copper (Cu) and nickel (Ni). The conductive material is preferably a material which does not form an intermetallic compound with lithium (Li).

### [Layer of negative electrode active material]

The layer 12 of the negative electrode active material contains the negative electrode active material of the present invention which is capable of storing and releasing lithium ions, and from the viewpoint of battery design, it may further contain other materials such as a negative electrode binding agent (binder), a conductive aid, and the like. The negative electrode active material contains particles of negative electrode active material, and the particles of negative electrode active material contain particles of silicon compound which contain a silicon compound (SiOₓ: 0.5≤x<1.0).

In addition, the layer 12 of the negative electrode active material may contain a mixed negative electrode active material which contains the negative electrode active material of the present disclosure (silicon-based active material) and a carbon-based active material. According to this constitution, electric resistance of the layer of negative electrode active material is lowered, and it is possible to alleviate the expansion stress accompanying charging. As the carbon-based active material, for example, thermally decomposed carbons, cokes, glassy carbon fibers, fired bodies of organic polymer compounds, carbon blacks and the like may be used.

In addition, the negative electrode active material of the present disclosure contains particles of silicon compound, and particles of silicon compound contain a silicon compound (SiOₓ: 0.5≤x<1.0) as mentioned above. If "x" is less than 0.5, a number of silicon bonds is excessively increased, so that they show a degradation behavior similar to that of metal silicon. If "x" is 1.0 or more, discharge capacity is lowered. Also, when cycle characteristics and active material capacity (battery capacity) are taking into consideration, "x" of SiOₓ (silicon oxide) is more desirably in the range of 0.6≤x≤ 0.8. If "x" is 0.6 or more, a number of silicon bonds is not so excessively increased, so that it becomes difficult to show a degradation behavior similar to that of metal silicon. Note that the composition of the silicon compound of the present invention does not necessarily mean purity 100%, and it may contain a minute amount of impurity element(s).

In the negative electrode active material of the present disclosure the particles of silicon compound contain Li. More specifically, it is preferable that the particles of silicon compound contain one or more kinds selected from Li₂SiO₃ and Li₄SiO₄. These materials are materials in which the SiO₂ component portion in the silicon compound, which becomes unstable at the time of inserting and releasing lithium at the time of charge and discharge of the battery has previously been reformed into another lithium silicates, so that irreversible capacity generating at the time of charging can be reduced. In addition, if these Li silicates that are relatively stable as Li compounds are contained, the stability to a slurry at the time of producing the electrode is further improved.

The negative electrode active material of the present disclosure has discharge capacity in the battery evaluation using a counter electrode Li (reversible capacity) of 1,550 mAh/g or more and 2,200 mAh/g or less. The discharge capacity is preferably 2,000 mAh/g or more and 2,200 mAh/g or less. If the discharge capacity in the battery evaluation using a counter electrode Li is less than 1,550 mAh/g, when the negative electrode active material is used for a negative electrode active material of an actual secondary battery, discharge capacity cannot be improved. If the discharge capacity in the battery evaluation using a counter electrode Li exceeds 2,200 mAh/g, when the negative electrode active material is used for a negative electrode active material of an actual secondary battery, cycle characteristics cannot be improved.

Note that the 0 V constant current and constant voltage charging (0 V CC/CV charging) when the discharge capacity in the battery evaluation using a counter electrode Li is measured means that after producing a secondary battery using lithium as a counter electrode, the battery is charged with a constant current (current density: 0.2 mA/cm²) mode up to 0 V, then, a constant voltage mode from 0 V, and after reaching the current density to 0.1 mA/cm², charging is terminated. Next, the 1.2 V constant current discharge means that the battery is discharged with a constant current (current density: 0.2 mA/cm²) mode, and after reaching the voltage to 1.2 V, discharging is terminated.

The negative electrode active material of the present disclosure is a material improved in a ratio of the silicon component in the bulk of the silicon oxide, and also improved in reversible capacity. When the negative electrode active material is used as a negative electrode active material of a secondary battery, cycle characteristics are improved. On the other hand, the discharge capacity of the negative electrode active material comprising the silicon simple substance is about 3,350 mAh/g, and when the negative electrode active material is used as a negative electrode active material of a secondary battery, cycle characteristics are worsened. The conventional negative electrode active material containing silicon oxide having "x" of less than 1 has a small discharge capacity, and discharge capacity in the battery evaluation using a counter electrode Li is considered to be less than 1,550 mAh/g.

In the negative electrode active material of the present invention, the particles of negative electrode active material may contain a carbon material at the surface layer portion. The carbon material may be present on the entire surface of particles of negative electrode active material, and it may be a part thereof. By containing the carbon material at the surface layer portion of the particles of negative electrode active material, electric resistance can be lowered and conductivity can be improved, so that the negative electrode active material containing such particles of negative electrode active material is used as a secondary battery, the battery characteristics can be improved.

The median diameter (D₅₀: particle diameter when the cumulative volume is 50%) of the particles of negative electrode active material is preferably 3.0 µm or more and 12 µm or less. If the median diameter is within the range, lithium ions are more likely to be stored and released at the time of charge and discharge, and the particles are less likely to break. If the median diameter is 3.0 µm or more, the surface area per mass can be made small, and increase in battery irreversible capacity can be suppressed. In addition, the specific surface area of the particles of negative electrode active material does not become too large, so that the reaction area does not become too large. On the other hand, by making the median diameter 12 µm or less, the particles become difficultly crack whereby new surface hardly comes out. For example, breakage and cracks difficultly generate in the particles accompanied by charging and discharging.

As the binder of the negative electrode contained in the layer of negative electrode active material, for example, any one or more kinds of polymer materials, synthetic rubbers and the like can be used. Examples of the polymer material may include, for example, polyvinylidene fluoride, polyimide, polyamideimide, aramid, polyacrylic acid, lithium polyacrylate, carboxymethyl cellulose and the like. Examples of the synthetic rubber may include, for example, styrene butadiene-based rubber, fluorine-based rubber, ethylene propylene diene and the like.

As the negative electrode conductive aid, for example, any one or more kinds of carbon materials such as carbon black, acetylene black, graphite, ketjen black, carbon nanotube, carbon nanofiber and the like may be used.

The layer of negative electrode active material can be formed, for example, by a coating method. The coating method is a method in which a silicon-based active material, the binder and the like, and, if necessary, a conductive aid, and a carbon-based active material are mixed and then dispersed in an organic solvent, water or the like and coated.

### <Producing apparatus of negative electrode active material>

Next, the producing apparatus of the negative electrode active material (the forming apparatus of the negative electrode active material) which can be used in the method for producing the negative electrode active material of the present disclosure is explained.

### [First apparatus]

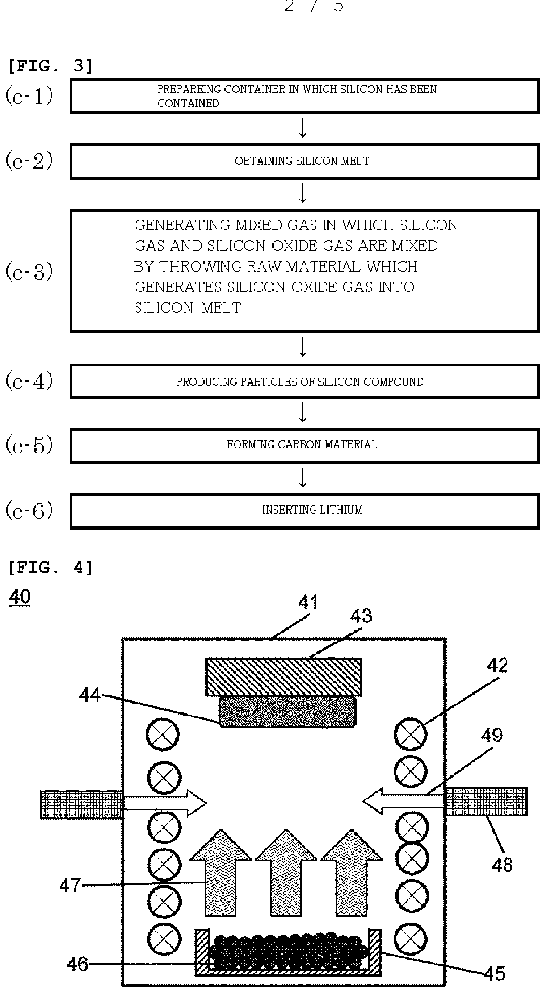

Fig. 4 is a schematic view showing one example of a producing apparatus of a negative electrode active material (hereinafter also referred to as a first apparatus) that can be used in the method for producing a negative electrode active material of the present disclosure. The producing apparatus of a negative electrode active material 40 has a chamber 41, a heater 42, an adsorption plate (deposition plate) 43 and a material reaction tank 45.

The chamber 41 is preferably a vacuum chamber capable of evacuating. The chamber 41 is preferably so constituted that the pressure in the chamber 41 can be evacuated to a predetermined pressure or less.

The heater 42 may be any device as long as it can heat the inside of the chamber 41 (in particular, the material reaction tank 45). Examples of the heating method may be mentioned a resistance heating method and an induction heating method.

The adsorption plate 43 may be any material as long as it can adsorb the silicon compound (silicon oxide) 44. The adsorption plate 43 is desirably changed its material, shape, or the like, depending on the temperature and degree of vacuum in the chamber 41.

The material reaction tank 45 may be any material as long as it can contain the raw material 46 which generates the silicon oxide gas. The material of the material reaction tank is not particularly limited, and carbon or ceramic is desirable, and more desirably a carbon material. For example, when an induction heating method is used as a heating method of the heater 42, by preparing a crucible having an outer wall made of a carbon material as the material reaction tank 45 in the chamber 41, the material reaction tank 45 can be heated by the induction heating method.

The first apparatus 40 further has a reducing gas introduction pipe 48. The reducing gas introduction pipe 48 may be any material as long as it can introduce a reducing gas 49. The reducing gas 49 is desirably directly blown to the vapor deposition flow (that is, a silicon oxide gas 47 generated by heating the raw material 46 which generates the silicon oxide gas), and the piping may extend inside the vapor deposition flow. In such a case, particularly when a carbon-based piping is used, the temperature resistance is high and stabilized. The atmosphere in the chamber 41 may be exposed to a reducing gas 49.

### [Second apparatus]

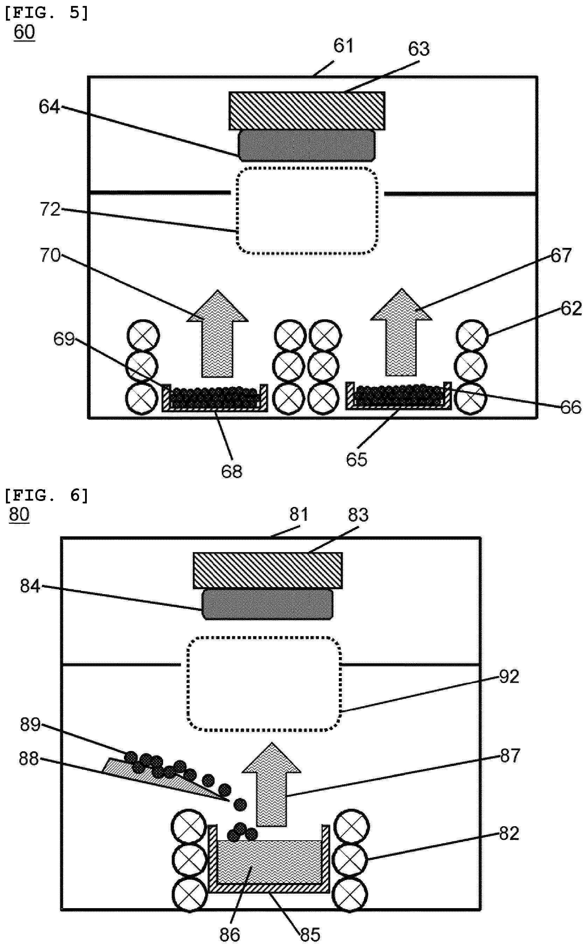

Fig. 5 is a schematic view showing another example of an apparatus for producing a negative electrode active material (hereinafter also referred to as the second apparatus) that can be used in the method for producing a negative electrode active material of the present disclosure. The producing apparatus of the negative electrode active material 60 has, similarly to the producing apparatus of the negative electrode active material 40, a chamber 61, a heater 62 for heating the inside of the chamber 61, an adsorption plate 63 for adsorbing silicon oxide 64, and a material reaction tank 65 which contains a raw material 66 which generates the silicon oxide gas. A silicon oxide gas 67 can be generated by heating the raw material 66 which generates the silicon oxide gas.

The second apparatus 60 further has a material reaction tank 68 which contains the raw material 69 which generates the silicon gas. The material of the material reaction tank is not particularly limited, and carbon or ceramic is desirable, and more desirably a carbon material. A silicon gas 70 can be generated by heating the raw material 69 which generates the silicon gas.

In the mixed region 72 of the silicon gas and the silicon oxide gas, the silicon oxide gas 67 and the silicon gas 70 are mixed to make a mixed gas in which two kinds of gases are mixed.

As shown in Fig. 5, in the case where a container (material reaction tank 68) for containing the raw material which generates the silicon gas and a container (material reaction tank 65) for containing the raw material which generates the silicon oxide gas are located in the same chamber, it is necessary to consider the influence of the vapor pressure, so that it is preferable to make the temperature of the silicon gas higher than that of the silicon oxide gas. Accordingly, it is preferable to use an induction heating method as the heating method of the heater 62. That is, it is preferable to have an induction heating coil. In this case, generation temperatures of the silicon oxide gas and the silicon gas are adjusted by the induction heating method, and a silicon component of a mixed gas can be adjusted.

### [Third apparatus]

Fig. 6 is a schematic view showing another example of an apparatus for producing a negative electrode active material (hereinafter also referred to as the third apparatus) that can be used in the method for producing a negative electrode active material of the present disclosure. The producing apparatus of the negative electrode active material 80 has, similar to the producing apparatus of the negative electrode active material 40, a chamber 81, a heater 82 for heating the inside of the chamber 81, and an adsorption plate 83 for adsorbing silicon oxide 84.

The third apparatus 80 further has a material reaction tank 85 for containing a silicon melt 86. The material of the material reaction tank is not particularly limited, and carbon or ceramic is desirable, and more desirably a carbon material.

The third apparatus 80 further has a holding member 88 for introducing a raw material 89 which generates the silicon oxide gas into the silicon melt 86. The material of the holding member 88 is not particularly limited, and carbon or ceramic is desirable, and more desirably a carbon material.

By introducing the raw material 89 which generates the silicon oxide gas into the silicon melt 86 from the holding member 88, a mixed gas 87 in which a silicon gas and a silicon oxide gas are mixed can be generated.

In the mixed region 92 of the silicon gas and the silicon oxide gas, more sufficient mixing of the silicon oxide gas and the silicon gas can be achieved.

The second apparatus or the third apparatus may have a reducing gas introduction pipe 48 shown in Fig. 4. According to this constitution, silicon oxide with more silicon-rich can be produced.

### <Method for producing negative electrode active material>

Next, the method for producing the negative electrode active material of the present invention is explained.

### [First method for producing negative electrode active material]

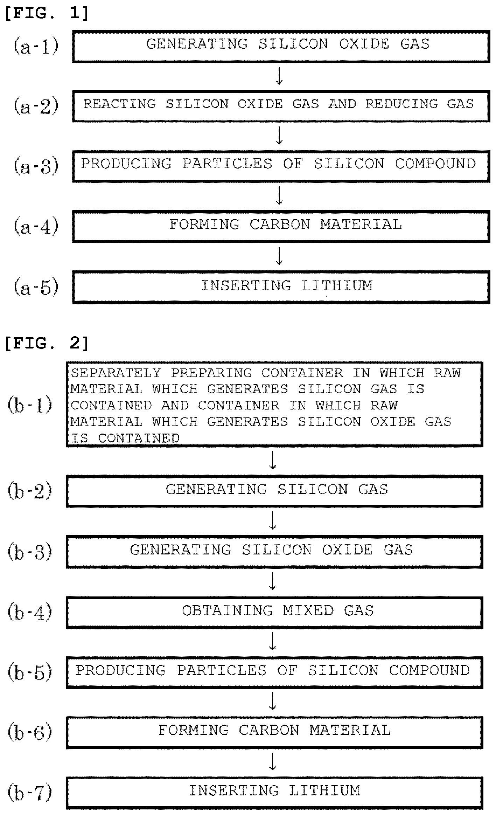

Fig. 1 is a flow chart showing one example (hereinafter also referred to as a first method for producing a negative electrode active material) of a method for producing a negative electrode active material of the present disclosure. Steps a-1 to a-3 in the first method for producing the negative electrode active material shown in Fig. 1 can be carried out by using, for example, the first apparatus.

First, a silicon oxide gas is generated by heating a raw material which generates the silicon oxide gas (step a-1 of Fig. 1).

At this time, it is preferable to heat the raw material which generates the silicon oxide gas in the presence of an inert gas or under reduced pressure in a temperature range of 900°C to 1,700°C to generate a silicon oxide gas. The silicon oxide gas obtained by the above method is particularly desirable to react in an atmosphere of 1,400°C or more. This is because if the temperature is 1,400°C or more, reductivity becomes good. Although the upper limit temperature is not particularly determined, 1,700°C or less is desirable from the viewpoint of the structure of the apparatus.

At this time, as the raw material which generates the silicon oxide gas, a mixture of metal silicon powder and silicon dioxide powder can be used. When the presence of surface oxygen of the metal silicon powder and a minute amount of oxygen in a reaction furnace are considered, a mixing ratio is desirably in the range of 0.8<metal silicon powder/silicon dioxide powder<1.3. The silicon oxide gas sublimes from the contact interface between silicon and silicon dioxide, so that their balance is desirably closer (that is, a formulation ratio of the metal silicon and the silicon dioxide is about 1:1).

Next, the silicon oxide gas and the reducing gas are reacted (step a-2 of Fig. 1). One or more kinds selected from a CO gas, a H₂S gas, a SO₂ gas and a H₂ gas is introduced into the silicon oxide gas as a reducing gas in the state of high temperature, so that an oxygen portion of the silicon oxide can be partially reduced. A temperature of the reducing gas to be introduced can be made in the range of 900°C to 1,700°C. In the first method for producing the negative electrode active material, a gas having high reductivity is introduced into the silicon oxide gas, and reduction of the silicon oxide is carried out by maintaining inside of the furnace to high temperature. As the reducing gas, a carbon monoxide gas or a hydrogen gas is particularly desirable. Even when the similar reducing gas is used to the particles of silicon oxide after deposition and pulverization, and heat treatment is carried out, only the surface layer portion of the particles of silicon oxide is reduced, and it is difficult to change the composition of the entire particles of silicon oxide. On the other hand, in the first method for producing the negative electrode active material, it is possible to uniformly reduce the particles by using a reducing gas to a vapor deposition flow which is more decomposed into atomic or molecular units.

Next, the material (gas) obtained by the reduction reaction is solidified and deposited on an adsorption plate to produce particles of silicon compound containing the silicon compound (SiOₓ: 0.5≤x<1.0) (step a-3 of Fig. 1). For example, the deposited material is taken out at the state that a temperature inside the reaction furnace is lowered to 100°C or less, and pulverization and powderization are carried out by using a ball mill, a jet mill, or the like to produce particles of silicon compound containing a silicon compound (SiOₓ: 0.5≤x<1.0). The value of "x" can be controlled by changing a mixing ratio of the silicon oxide gas and the reducing gas.

Next, a carbon material is formed on the surface layer portion of the particles of silicon compound (step a-4 of Fig. 1). However, this step is not indispensable. As a method of forming a layer of carbon material, a thermal decomposition CVD method is desirable. An example of a method for forming a layer of carbon material by the thermal decomposition CVD method is explained below.

First, the particles of silicon compound are set in a furnace. Next, the furnace is filled with a hydrocarbon gas and a temperature in the furnace is raised. The decomposition temperature can be made in the range of 600°C to 1,400°C. The decomposition temperature is more desirably 1,000°C or less. By making the decomposition temperature 1,000°C or less, it is possible to suppress unintentional disproportionation of the particles of active material. After the temperature in the furnace is raised to a predetermined temperature, a carbon material is formed on the surface of particles of silicon compound. The hydrocarbon gas which becomes a raw material of the carbon material is not particularly limited, and it is desirable that n≤3 in the composition of CₙHₘ. If n≤3, the production cost can be lowered, and the physical properties of the decomposed product can be improved.

Measurement of the carbon content can be determined using a total organic carbon meter manufactured by Shimadzu Corporation.

Next, Li is inserted into the particles of silicon compound thus produced (step a-5 of Fig. 1).

Even when the oxygen amount of the silicon oxide is reduced and silicon-rich silicon oxide is produced, the irreversible capacity of the battery is not dramatically improved. For example, when "x" of SiOₓ is 0.7, the initial efficiency (first time efficiency) of the secondary battery using the negative electrode containing the same is about 74%, and the negative electrode has low efficiency as a negative electrode for a lithium ion secondary battery. Thus, Li doping is previously carried out to the particles of silicon oxide, and Li that is lost at the time of charging is supplemented as a battery.

The method of Li doping is not particularly limited, and oxidation reduction method and electrochemical method are desirable. This is because crystallization of the silicon can be suppressed.

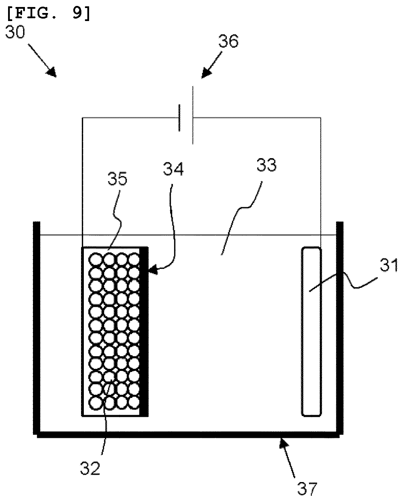

In the reforming by the electrochemical method, the apparatus structure is not particularly limited and, for example, Li can be inserted by using an electrochemical Li-doping reformer 30 shown in Fig. 9. The electrochemical Li-doping reformer 30 has a bath 37 filled with an organic solvent 33, a positive electrode (lithium source) 31 located in the bath 37 and connected to one of power sources 36, a powder storage container 35 located in the bath 37 and connected to the other side of the power sources 36, and a separator 34 provided between the positive electrode 31 and the powder storage container 35. In the powder storage container 35, the particles of silicon compound 32 are stored.

As the organic solvent 33 in the bath 37, ethylene carbonate, propylene carbonate, dimethyl carbonate, diethyl carbonate, ethyl methyl carbonate, fluoromethyl methyl carbonate, difluoromethyl methyl carbonate and the like can be used. As the electrolyte salt contained in the organic solvent 33, lithium hexafluorophosphate (LiPF₆), lithium tetrafluoroborate (LiBF₄) and the like can be used.

As the positive electrode 31, a Li foil may be used, and a Li-containing compound may be used. The Li-containing compound may be mentioned lithium carbonate, lithium oxide and the like.

After the electrochemical Li-doping reforming, it may be washed with an alcohol, an alkaline water, a weak acid, pure water or the like.

In addition, Li may be inserted into the particles of silicon compound by using an oxidation-reduction method. In the reforming by the oxidation-reduction method, for example, lithium can be inserted by firstly immersing the particles of silicon compound in a solution A in which lithium is dissolved in an ether solvent. This solution A may further contain one or more kinds selected from polyphenylene compounds and derivatives thereof and a polycyclic aromatic compound and a derivative thereof. After insertion of lithium, the particles of silicon compound are immersed in a solution B containing one or more kinds selected from a polycyclic aromatic compound and a derivative thereof, active lithium can be desorbed from the particles of silicon compound. As a solvent of the solution B, for example, an ether-based solvent, a ketone-based solvent, an ester-based solvent, an alcohol-based solvent, an amine-based solvent, or a mixed solvent thereof can be used. Further, after immersing in the solution B, by immersing the particles of silicon compound in a solution C containing an alcohol-based solvent, a carboxylic acid-based solvent, water, or a mixed solvent thereof, active lithium can be desorbed with a more amount from the particles of silicon compound. Instead of the solution C, a solution C' containing a compound having a quinoid structure in the molecule as a solute and containing an ether-based solvent, a ketone-based solvent, an ester-based solvent, or a mixed solvent thereof as a solvent may be used. Also, immersion of the particles of silicon compound in the solutions B, C and C' may be carried out repeatedly. In this manner, when the active lithium is desorbed after insertion of the lithium, it becomes a negative electrode active material having higher water resistance. Thereafter, it may be washed with an alcohol, an alkaline water in which lithium carbonate has been dissolved, a weak acid, pure water or the like.

### [Second method for producing negative electrode active material]

Fig. 2 is a flow chart showing another example (hereinafter also referred to as a second method for producing a negative electrode active material) of a method for producing a negative electrode active material of the present invention. Steps b-1 to b-5 in the second method for producing the negative electrode active material shown in Fig. 2 can be carried out, for example, by using the second apparatus.

First, a container in which a raw material which generates a silicon gas is contained and a container in which a raw material which generates a silicon oxide gas is contained are separately prepared (step b-1 of Fig. 2). The raw material may be stored in the chamber or outside the chamber.

Next, a silicon gas is generated by heating the raw material which generates the silicon gas (step b-2 of Fig. 2).

At this time, it is preferable to generate the silicon gas by heating the raw material which generates a silicon gas in the presence of an inert gas or under reduced pressure at a temperature range where silicon melts (for example, about 1,420°C or more which is the melting point of silicon). In this case, the raw material which generates the silicon gas is desirably metal silicon.

Next, a silicon oxide gas is generated by heating the raw material which generates a silicon oxide gas (step b-3 of Fig. 2). Incidentally, the order of step b-2 of Fig. 2 and step b-3 of Fig. 2 is not particularly limited and may be carried out simultaneously.

At this time, it is preferable to heat the raw material which generates a silicon oxide gas in the presence of an inert gas or under reduced pressure in a temperature range of 900°C to 1,700°C to generate a silicon oxide gas.

At this time, as a raw material which generates the silicon oxide gas, a mixture of metal silicon powder and silicon dioxide powder can be used. When the presence of surface oxygen of the metal silicon powder and a minute amount of oxygen in a reaction furnace are taking into consideration, a mixing ratio is desirably in the range of 0.8<metal silicon powder/silicon dioxide powder<1.3. The silicon oxide gas sublimes from the contact interface between silicon and silicon dioxide, so that their balance is desirably closer.

In the second method for producing the negative electrode active material, the silicon gas may be formed in the same room as the silicon oxide gas, or may be mixed after being produced in separate rooms. When these are generated in the same room, in particular, it is necessary to consider the influence of vapor pressure. Since the temperature of the silicon gas which becomes the same vapor pressure as that of the silicon oxide gas is higher by 100°C or more, in the case where these are to be gasified in the same chamber, it is desirable to maintain the container in which a raw material which generates a silicon gas is contained at a temperature higher than that of the container in which a raw material which generates a silicon oxide gas is contained in order to make the temperature of the silicon gas higher than that of the silicon oxide gas.

A method of maintaining the container in which a raw material which generates a silicon gas is contained at a high temperature is not particularly limited, and an induction heating method is desirable. In the case of using the induction heating method, it is effective to use a carbon material as a material of the container with a view of reducing contamination of materials.

Next, the silicon gas and the silicon oxide gas are mixed to give a mixed gas (step b-4 of Fig. 2). In the mixed region 72 of the silicon gas and the silicon oxide gas shown in Fig. 5, the silicon oxide gas 67 and the silicon gas 70 are mixed to form a mixed gas of two kinds.

Next, the mixed gas is solidified and deposited on an adsorption plate to produce particles of silicon compound containing a silicon compound (SiOₓ: 0.5≤x<1.0) (step b-5 of Fig. 2). For example, the deposited material is taken out with the temperature inside the reaction furnace lowered to 100°C or less, and subjected to pulverization and powderization using a ball mill, a jet mill and the like to produce particles of silicon compound containing a silicon compound (SiOₓ: 0.5≤x<1.0). The value of "x" can be controlled by changing the mixing ratio of the silicon gas and the silicon oxide gas.

Thus, in the second method for producing the negative electrode active material, the same method as the first method for producing the negative electrode active material is used for the method of obtaining a silicon oxide gas, but a silicon gas is generated in the separate container from the silicon oxide, and after mixing it with the silicon oxide gas, silicon oxide is deposited and silicon-rich silicon oxide can be formed.

The details of the formation of the carbon material (step b-6 of Fig. 2) and the insertion of lithium (step b-7 of Fig. 2) are the same as the first method for producing the negative electrode active material.

### [Third method for producing negative electrode active material]

Fig. 3 is a flow chart showing another example (hereinafter also referred to as the third method for producing the negative electrode active material) of a method for producing a negative electrode active material of the present invention. Steps c-1 to c-4 in the third method for producing of the negative electrode active material shown in Fig. 3 can be carried out by using, for example, the third apparatus.

First, a container in which silicon has been contained is prepared (step c-1 of Fig. 3). For example, a container in which metal silicon has been contained is prepared. The raw material may be stored in the chamber or outside the chamber.

Next, silicon contained in a container in which silicon has been contained is melted to form a silicon melt (Fig. 3 step c-2). For example, a silicon melt can be obtained by heating the container in which silicon has been contained at about 1,420°C or more, which is a melting point of silicon, by a resistance heating method or an induction heating method.

Next, a raw material which generates the silicon oxide gas is introduced into the silicon melt to generate a mixed gas in which a silicon gas and a silicon oxide gas are mixed (step c-3 of Fig. 3). At this time, it is preferable to generate a mixed gas in which a silicon gas and a silicon oxide gas are mixed by introducing a raw material which generates the silicon oxide gas into the silicon melt in the presence of an inert gas or under reduced pressure. As a raw material which generates the silicon oxide gas, a mixture of metal silicon powder and silicon dioxide powder can be used. In the third method for producing a negative electrode active material, a mixed gas of a silicon gas and a silicon oxide gas may be generated by introducing particles of mixed granule of metal silicon and silicon dioxide into molten silicon. In this case, when changing the composition ratio (a ratio of silicon and oxygen) of the particles of silicon compound to be formed, it can be controlled by an amount of the silicon oxide precursor (raw material for generating silicon oxide gas) to be introduced and a temperature of the melting crucible, which becomes more simple and easy means.

Next, the mixed gas is solidified and deposited on an adsorption plate to produce particles of silicon compound containing a silicon compound (SiOₓ: 0.5≤x<1.0) (step c-4 of Fig. 3). For example, the deposited material is taken out at the state that a temperature inside the reaction furnace is lowered to 100°C or less, and pulverization and powderization are carried out by using a ball mill, a jet mill, or the like to produce particles of silicon compound containing a silicon compound (SiOₓ: 0.5≤x<1.0).

The details of the formation of the carbon material (step c-5 of Fig. 3) and the insertion of lithium (step c-6 of Fig. 3) are the same as the first method for producing the negative electrode active material.

The silicon oxide obtained by the first to third processes for producing the negative electrode active material has "x" of SiOₓ in the range of 0.5≤x<1.0. On the other hand, the silicon oxide prepared without introducing a reducing gas or a silicon gas has a value of "x" in the vicinity of 1 to 1.2.

The negative electrode active material obtained by the method for producing the negative electrode active material of the present invention using a reduction method (the first method for producing the negative electrode active material) or a silicon gas mixing method (the second method for producing the negative electrode active material and the third method for producing the negative electrode active material) preferably has a discharge capacity in the battery evaluation using a counter electrode Li of 1,550 mAh/g or more and 2,200 mAh/g or less. The discharge capacity of the silicon oxide produced without introducing a reducing gas or a silicon gas becomes smaller than 1,550 mAh/g. By partially removing the oxygen component, the discharge capacity per mass of the active material can be increased. Or else, by increasing the silicon component, the discharge capacity per mass of the active material can be increased. At this time, a large discharge capacity can be obtained when the composition becomes closer to silicon than silicon oxide, but battery cycle characteristics are lowered. Thus, the allowable oxygen amount falls within the range, and the discharge capacity in the battery evaluation using a counter electrode Li of the obtained negative electrode active material is preferably in the range.

### <Method for producing negative electrode>

Next, a method for producing the negative electrode is explained. First, the silicon-based active material obtained by the method for producing the negative electrode active material of the present invention and a carbon-based active material depending on necessity are mixed, and these particles of negative electrode active material and other materials such as a binder (negative electrode binding agent), a conductive aid and the like are mixed to form a negative electrode mixture, and then an organic solvent or water and the like is added to make a slurry.

Next, the slurry of the negative electrode mixture is coated on the surface of negative electrode current collector, and dried to form a layer of negative electrode active material. At this time, a heating press or the like may be carried out depending on necessity. In this manner, a negative electrode can be produced.

### <Non-aqueous electrolyte secondary battery>

Next, the non-aqueous electrolyte secondary battery of the present disclosure is explained. The non-aqueous electrolyte secondary battery of the present disclosure is a material using the negative electrode containing the negative electrode active material of the present disclosure or the mixed negative electrode active material of the present disclosure. Here, as specific examples, a laminate film type lithium ion secondary battery is mentioned as an example.

S

### [Constitution of laminate film type lithium ion secondary battery]

The laminate film type lithium ion secondary battery 20 shown in Fig. 8 is a material in which a spirally wound electrode body 21 is housed mainly inside of a sheet-like exterior member 25. This spirally wound electrode body has a separator between a positive electrode and a negative electrode, and is wound. In addition, there is a case where it has a separator between a positive electrode and a negative electrode, and a laminate is housed. In either of the electrode bodies, a positive electrode lead 22 is attached to the positive electrode, and a negative electrode lead 23 is attached to the negative electrode. The outermost peripheral portion of the electrode body is protected by a protective tape.

The positive and negative electrode leads are, for example, led out from the inside to the outside of an exterior member 25 in one direction. The positive electrode lead 22 is formed, for example, by a conductive material such as aluminum and the like, and the negative electrode lead 23 is formed, for example, by a conductive material such as nickel, copper and the like.

The exterior member 25 is, for example, a laminate film in which a fusion layer, a metallic layer and a surface protective layer in this order, and the laminate film is so formed that the outer peripheral edge portions of the fusion layers of the two laminated films are fused to each other or bonded with an adhesive or the like so as to face the fusion layer to the spirally wound electrode body 21. The fused portion is, for example, a film such as polyethylene, polypropylene and the like, and the metal portion is an aluminum foil and the like. The protective layer is, for example, nylon and the like.

An adhesive film 24 is inserted between the exterior member 25 and the positive and negative electrode leads for the prevention of outside air intrusion. This material is, for example, polyethylene, polypropylene or polyolefin resin.

### [Positive electrode]

The positive electrode has, for example, a layer of positive electrode active material(s) on both sides or one side of a positive electrode current collector similar to the negative electrode.

The positive electrode current collector is formed, for example, by a conductive material such as aluminum and the like.

The layer of positive electrode active material contains any one or two or more kinds of positive electrode materials capable of storing and releasing lithium ions, and may contain other materials such as a positive electrode binder, a positive electrode conductive aid, a dispersant and the like depending on the design. In this case, details regarding the positive electrode binder and the positive electrode conductive aid can be, for example, the same as those of the negative electrode binder and the negative electrode conductive aid as already mentioned above.

As the positive electrode material, a lithium-containing compound is desirable. The lithium-containing compound may be mentioned, for example, a composite oxide comprising lithium and a transition metal element, or a phosphate compound having lithium and a transition metal element. Among these positive electrode materials, a compound having at least one kind of nickel, iron, manganese and cobalt is preferable. The chemical formulae thereof are represented by, for example, LiₓM₁O₂ or Li_{y}M₂PO₄. In the formulae, M₁ and M₂ each represent at least one transition metal element. The values of "x" and "y" vary depending on the state of charge and discharge of the battery, and these generally represent 0.05≤x≤1.10 and 0.05 ≤y≤1.10.

Examples of the composite oxides having lithium and a transition metal element may be mentioned, for example, lithium cobalt composite oxide (LiₓCoO₂), lithium nickel composite oxide (LiₓNiO₂), lithium nickel cobalt composite oxide, and the like. Examples of the lithium nickel cobalt composite oxide may be mentioned, for example, lithium nickel cobalt aluminum composite oxide (NCA), lithium nickel cobalt manganese composite oxide (NCM), and the like. Examples of the phosphate compound having lithium and a transition metal element may be mentioned, for example, lithium iron phosphate compound (LiFePO₄), lithium iron manganese phosphate compound (LiFe₁₋ᵤMnᵤPO₄ (0<u<1)), and the like. By using these positive electrode materials, high battery capacity can be obtained and excellent cycle characteristics can be also obtained.

### [Negative electrode]

The negative electrode has a structure similar to that of the negative electrode for the non-aqueous electrolyte secondary battery, and has, for example, a layer of negative electrode active material on both sides of the current collector. In this negative electrode, it is preferable that the negative electrode charge capacity is larger than the electric capacity (charge capacity as a battery) obtained from a positive electrode active material agent. According to this constitution, deposition of lithium metal on the negative electrode can be suppressed.

The layer of positive electrode active material is provided on a part of both surfaces of the positive electrode current collector, and the layer of negative electrode active material is also similarly provided on a part of both surfaces of the negative electrode current collector. In this case, for example, the layer of negative electrode active material provided on the negative electrode current collector is provided with a region where no opposing layer of positive electrode active material exists. This is to carry out a stable battery design.

At the region where the layer of negative electrode active material and the layer of positive electrode active material do not oppose to each other, there is almost no influence of charge and discharge. Therefore, the state of the layer of negative electrode active material is maintained immediately after the formation, whereby the composition of the negative electrode active material or the like, can be accurately examined with good reproducibility without depending on the presence or absence of charge and discharge.

### [Separator]

The separator is a material which separates the positive electrode and the negative electrode, and allows lithium ions to pass while preventing a current short circuit caused by contacting the both electrodes. This separator is made of, for example, a synthetic resin, or a porous film made of ceramic, and may have a laminated structure in which two or more kinds of porous films are laminated. The synthetic resin may be mentioned, for example, polytetrafluoroethylene, polypropylene, polyethylene, and the like.

### [Electrolyte]

At least a part of the layer of active material or the separator is impregnated with a liquid electrolyte (an electrolytic solution). In this electrolytic solution, an electrolyte salt is dissolved in a solvent, and other materials such as an additive(s) and the like may be also contained.

The solvent may be used, for example, a non-aqueous solvent. The non-aqueous solvent may be mentioned, for example, ethylene carbonate, propylene carbonate, butylene carbonate, dimethyl carbonate, diethyl carbonate, ethyl methyl carbonate, methyl propyl carbonate, 1,2-dimethoxy ethane, tetrahydrofuran or the like. Among these, it is desirable to use at least one of ethylene carbonate, propylene carbonate, dimethyl carbonate, diethyl carbonate and ethyl methyl carbonate. This is because better characteristics can be obtained. In this case, by using a high viscosity solvent such as ethylene carbonate, propylene carbonate or the like, in combination with a low viscosity solvent such as dimethyl carbonate, ethyl methyl carbonate, diethyl carbonate or the like, more advantageous characteristics can be obtained. This is because dissociation property and ion mobility of the electrolyte salt are improved.

In the case of using an alloy-based negative electrode, it is particularly desirable that at least one of a halogenated linear carbonic acid ester and a halogenated cyclic carbonic acid ester is contained as a solvent. According to this constitution, a stable coating film can be formed on the surface of negative electrode active material at the time of charge and discharge, particularly at the time of charging. The halogenated linear carbonic acid ester is a linear carbonic acid ester having a halogen as a constituent element (at least one hydrogen is substituted by a halogen). The halogenated cyclic carbonic acid ester is a cyclic carbonic acid ester having a halogen as a constituent element (at least one hydrogen is substituted by a halogen).

The kind of the halogen is not particularly limited, and fluorine is more preferable. This is because a coating film having better quality than the other halogens is formed. In addition, the number of the halogens is desirably as large as possible. This is because the obtained coating film is more stable and the decomposition reaction of the electrolytic solution is reduced.

The halogenated linear carbonic acid ester may be mentioned, for example, fluoromethyl methyl carbonate, difluoromethyl methyl carbonate and the like. The halogenated cyclic carbonic acid ester may be mentioned 4-fluoro-1,3-dioxolan-2-one, 4,5-difluoro-1,3-dioxolan-2-one and the like.

As a solvent additive, it is preferable to contain an unsaturated carbon bond cyclic carbonic acid ester. This is because a stable coating film is formed on the surface of negative electrode at the time of charge and discharge, and the decomposition reaction of the electrolytic solution can be suppressed. The unsaturated carbon bond cyclic carbonic acid ester may be mentioned, for example, vinylene carbonate, vinyl ethylene carbonate and the like.

It is also preferable that sultone (cyclic sulfonic acid ester) is contained as a solvent additive. This is because chemical stability of the battery is improved. The sultone may be mentioned, for example, propane sultone and propene sultone.

Further, it is preferable that the solvent contains an acid anhydride. This is because chemical stability of the electrolytic solution is improved. Examples of the acid anhydride may include, for example, propane disulfonic acid anhydride.

The electrolyte salt may include, for example, at least one of light metal salts such as a lithium salt and the like. The lithium salt may be mentioned, for example, lithium hexafluorophosphate (LiPF₆), lithium tetrafluoroborate (LiBF₄), and the like.

The content of the electrolyte salt is preferably 0.5 mol/kg or more and 2.5 mol/kg or less based on the content of the solvent. This is because high ion conductivity can be obtained.

### [Method for producing laminate film type lithium ion secondary battery]

In the present disclosure a negative electrode is produced by using the negative electrode active material produced by the method for producing the negative electrode active material of the present disclosure, and a non-aqueous electrolyte secondary battery such as a lithium ion secondary battery or the like is produced by using the produced negative electrode.

Initially, a positive electrode is produced by using the positive electrode material. First, a positive electrode active material and, if necessary, a positive electrode binder, a positive electrode conductive aid and the like are mixed to form a positive electrode mixture, and then, dispersed in an organic solvent to prepare a positive electrode mixture slurry. Subsequently, the mixture slurry is coated to the positive electrode current collector with a coating apparatus such as a knife roll, a die coater having a die head or the like, and dried with hot air to obtain a layer of positive electrode active material. Finally, the layer of positive electrode active material is compression molded by a roll press machine or the like. At this time, the material may be heated, or heating or compression may be repeated a plurality of times.

Next, using the same operation procedure as in the production of the negative electrode 10 for the non-aqueous electrolyte secondary battery of Fig. 7, a layer of negative electrode active material is formed on the negative electrode current collector to produce a negative electrode.

At the time of producing the positive electrode and the negative electrode, respective layers of the active materials are formed on both surfaces of the positive electrode and the negative electrode current collectors. At this time, a coated length of the active material on both surfaces of either of the electrodes may be deviated (see Fig. 7).

Subsequently, an electrolytic solution is prepared. Then, as shown in Fig. 8, a positive electrode lead 22 is attached to the positive electrode current collector and a negative electrode lead 23 is attached to the negative electrode current collector by ultrasonic welding or the like. Subsequently, the positive electrode and the negative electrode are laminated or wound through a separator to produce a spirally wound electrode body 21, and a protective tape is adhered to the outermost peripheral portion thereof. Next, the spirally wound body is molded so as to have a flat shape. Then, after the spirally wound electrode body is sandwiched between the folded film-shaped exterior member 25, the insulation portions of the exterior member are adhered to each other by a thermal fusion method, and in a state where the wound electrode body is released in only one direction, the spirally wound electrode body is sealed. Subsequently, an adhesive film is inserted between the positive electrode lead, the negative electrode lead and the exterior member. Then, a prescribed amount of the prepared electrolytic solution was charged from the released portion and subjected to vacuum impregnation. After impregnation, the released portion is bonded by a vacuum thermal fusion method. The laminate film type lithium ion secondary battery 20 can be thus produced.

In the non-aqueous electrolyte secondary battery of the present disclosure such as the laminated film type lithium ion secondary battery 20 produced as mentioned above, and the like, it is preferable that the utilization ratio of the negative electrode at the time of charge and discharge is 93% or more and 99% or less. If the utilization ratio of the negative electrode is set to be in the range of 93% or more, the initial charging efficiency does not degrade, and the battery capacity can be markedly increased. In addition, if the utilization ratio of the negative electrode is set to be in the range of 99% or less, Li is not precipitated and safety can be secured.

### EXAMPLES

In the following, the present invention will be explained more specifically with reference to Examples and Comparative Examples, but the present invention is not limited to the following Examples.

### (Example 1-1)

The laminate film type lithium ion secondary battery 20 shown in Fig. 8 was produced by the following procedure.

First, a positive electrode was produced. The positive electrode active material was prepared by mixing 95 parts by mass of lithium cobaltate (LiCoO₂), 2.5 parts by mass of the positive electrode conductive aid, and 2.5 parts by mass of a positive electrode binder (polyvinylidene fluoride, PVDF) to prepare a positive electrode mixture. Subsequently, the positive electrode mixture was dispersed in an organic solvent (N-methyl-2-pyrrolidone, NMP) to form a paste-state slurry. Then, the slurry was applied on both sides of the positive electrode current collector by a coating apparatus having a die head and dried with a hot air drying apparatus. At this time, as the positive electrode current collector, that having a thickness of 15 µm was used. Finally, compression molding was performed with a roll press.

Next, the negative electrode was produced. First, the silicon-based active material was produced as follows.

Particles of silicon compound were prepared using the second apparatus shown in Fig. 5. First, a container in which a raw material which generates a silicon gas is contained and a container in which a raw material which generates a silicon oxide gas is contained were separately prepared (step b-1 of Fig. 2). As these containers, a crucible having an outer wall made of a carbon material was used. As the raw material which generates a silicon gas, metal silicon simple substance was used. As the raw material which generates a silicon oxide gas, a raw material in which metal silicon and silicon dioxide had been mixed was used. The containers containing these raw materials were installed in the same reaction furnace. The atmosphere in this reaction furnace was made an atmosphere with a degree of vacuum of 5×10⁻² Pa.

Next, a silicon gas was generated by heating the raw material which generates a silicon gas (step b-2 of Fig. 2). At this time, the heating system was made an induction heating system, and the container in which a raw material which generates a silicon gas is contained was heated to 1,550°C whereby heating the raw material which generates a silicon gas to generate a silicon gas.

Next, a silicon oxide gas was generated by heating the raw material which generates a silicon oxide gas (step b-3 of Fig. 2). At this time, the heating system was made an induction heating system, and a container in which a raw material which generates a silicon oxide gas is contained was heated to 1,300°C whereby heating the raw material which generates a silicon oxide gas to generate a silicon oxide gas.

Then, the silicon gas and the silicon oxide gas were mixed to obtain a mixed gas (step b-4 of Fig. 2). Subsequently, this mixed gas was deposited on an adsorption plate and sufficiently cooled, then, the deposited material was taken out and pulverized with a ball mill, and adjusted the particle size. According to these procedures, particles of silicon compound containing a silicon compound (SiOₓ: 0.5≤x<1.0) were produced (step b-5 of Fig. 2).

Next, a carbon layer was coated by carrying out the thermal decomposition CVD (step b-6 of Fig. 2).

Subsequently, lithium was inserted into the carbon-coated particles of silicon compound by an oxidation-reduction method and reformed (step b-7 of Fig. 2). First, particles of silicon compound were immersed in a solution (solution A) in which dissolving lithium pieces and biphenyl had been dissolved in tetrahydrofuran (hereinafter also referred to as THF). The solution A of Example 1-1 was prepared by dissolving biphenyl in a THF solvent at a concentration of 1 mol/L, and then adding a lithium piece with a mass content of 10% by mass to the mixed solution of THF and biphenyl. In addition, the temperature of the solution when the particles of silicon compound are immersed therein was 20°C and an immersion time was 10 hours. Thereafter, the particles of silicon compound were collected by filtration. According to the above procedure, lithium was inserted into the particles of silicon compound.

Next, the particles of silicon compound after insertion of the lithium were immersed in a solution (solution B) in which naphthalene has been dissolved in THF. The solution B of Example 1-1 was prepared by dissolving naphthalene in a THF solvent at a concentration of 2 mol/L. The temperature of the solution at the time of immersing the particles of silicon compound therein was made 20°C, and the immersion time was 20 hours. Thereafter, the particles of silicon compound were collected by filtration.

Thereafter, the particles of silicon compound after contacting with the solution B were immersed in a solution (solution C') in which p-benzoquinone was dissolved in THF at a concentration of 1 mol/L. The temperature of the solution at the time of immersing the particles of silicon compound therein was made 20°C, and the immersion time was 2 hours. Thereafter, the particles of silicon compound were collected by filtration.

Next, the particles of silicon compound were stirred in a saturated aqueous solution of lithium carbonate to carry out the washing treatment. Thereafter, the particles of silicon compound were collected by filtration. Then, the particles of silicon compound after the washing treatment was subjected to drying treatment under reduced pressure. A negative electrode active material containing the particles of negative electrode active material which contain particles of silicon compound was thus produced.

Next, the produced negative electrode active material (silicon-based active material), a conductive aid and polyacrylic acid were mixed at a dry mass ratio of 85:5:10 wt%, and then diluted with pure water to prepare a negative electrode mixture slurry.

As the negative electrode current collector, an electrolytic copper foil (thickness: 15 µm) was used. Finally, a slurry of the negative electrode mixture was coated to the negative electrode current collector and dried at 100°C for 1 hour in a vacuum atmosphere. The deposited amount (also called as area density) of the layer of negative electrode active material per unit area on one side of the negative electrode after drying was 2.5 mg/cm².

Next, after mixing the solvents (4-fluoro-1,3-dioxolane-2-one (FEC), ethylene carbonate (EC) and dimethyl carbonate (DMC)), an electrolyte salt (lithium hexafluorophosphate: LiPF₆) was dissolved to prepare an electrolytic solution. In this case, the composition of the solvent was made FEC:EC:DMC=10:20:70 in a volume ratio, and the content of the electrolyte salt was made 1.2 mol/kg based on the content of the solvent.

Next, a secondary battery was assembled as follows. First, an aluminum lead was ultrasonically welded to one end of the positive electrode current collector, and a nickel lead was welded to the negative electrode current collector. Subsequently, a positive electrode, a separator, a negative electrode, and a separator were laminated in this order and wound in a longitudinal direction to obtain a spirally wound electrode body. The winding end portion was fixed with a PET protective tape. As the separator, 12 µm of a laminated film in which a film containing porous polyethylene as a main component was sandwiched by films containing porous polypropylene as a main component was used. Subsequently, after sandwiching the electrode body between exterior members, outer peripheral edges except for one side were thermally fused, and the electrode body was accommodated inside thereof. As the exterior member, an aluminum laminate film in which a nylon film, an aluminum foil and a polypropylene film had been laminated was used. Then, the prepared electrolytic solution was injected from the opening, impregnated in a vacuum atmosphere, then heat fused and sealed.

The cycle characteristics and the first time charge and discharge characteristics of the secondary battery produced as mentioned above were evaluated.

The cycle characteristics were examined as follows. First, for battery stabilization, 1st cycle discharge capacity was measured by carrying out one cycle of charge and discharge at 0.2C in an atmosphere at 25°C. Subsequently, 0.5C charge and discharge was carried out until the total number of cycles reached 101 cycles, and the discharge capacity was measured each time. The discharge capacity at the 101st cycle was divided by the discharge capacity at the 2nd cycle to calculate the capacity retention rate (hereinafter also simply referred to as retention rate).

When the first time charge and discharge characteristics are to be examined, first time efficiency (hereinafter sometimes also referred to as initial efficiency) was calculated. The first time efficiency was calculated from the formula represented by the first time efficiency (%)=(first time discharge capacity/first time charge capacity)×100. The atmosphere and the temperature were set in the same manner as in the case where the cycle characteristics were examined.

The discharge capacity in the battery evaluation using a counter electrode Li was measured as follows. First, as a secondary battery for the battery evaluation using the counter electrode Li, a 2032 type coin battery was assembled.

The negative electrode was produced as follows. First, the silicon-based active material, a conductive aid and a polyacrylic acid were mixed with a ratio of 85:5:10 wt% to prepare a negative electrode mixture slurry. As the negative electrode current collector, an electrolytic copper foil (thickness: 15 µm) was used. Next, this negative electrode mixture slurry was coated on a negative electrode current collector, and dried at 90°C. This electrode was punched out to 15 mm² to prepare a negative electrode.

As the electrolytic solution, a material prepared by the same procedure as the electrolytic solution of the laminate film type lithium ion secondary battery in Example 1-1 was used.

As a counter electrode, a metal lithium foil having a thickness of 0.5 mm was used. In addition, polyethylene having a thickness of 20 µm was used as a separator.

Subsequently, a bottom lid of a 2032 type coin battery, a lithium foil and a separator were overlaid, 150 mL of an electrolytic solution was poured, followed by superimposing a negative electrode and a spacer (thickness: 1.0 mm), then, 150 mL of an electrolytic solution was poured, subsequently a spring and an upper lid of the coin battery are assembled in this order, and by crimping with an automatic coin cell caulking machine, a 2032 type coin battery was prepared.

Subsequently, CCCV charging was carried out to 0 V. Specifically, the battery was charged in a constant current (current density: 0.2 mA/cm²) mode up to 0 V, changed from 0 V to a constant voltage mode, and after the current density reached 0.1 mA/cm², the charge was terminated. Thereafter, CC discharge was carried out to 1.2 V. Specifically, the battery was discharged in a constant current (current density: 0.2 mA/cm²) mode, and after the voltage reached 1.2 V, the discharge was terminated. From the capacity at 1.2 V, the discharge capacity in the battery evaluation using a counter electrode Li was calculated.

### (Comparative Examples 1-1 and 1-2)

A negative electrode active material was produced in the same manner as in Example 1-1 except for using the second apparatus from which the container in which a raw material which generates a silicon gas had been contained was removed (that is, the silicon gas was not mixed) in place of the second apparatus. Then, the battery characteristics were evaluated in the same manner as in Example 1-1.

### (Examples 1-2 to 1-5, and Comparative Examples 1-3 and 1-4)

A negative electrode active material was produced in the same manner as in Example 1-1 except for changing the amount of oxygen of the silicon compound to those as shown in Table 1. Then, the battery characteristics were evaluated in the same manner as in Example 1-1.

### (Comparative Example 1-5)

A negative electrode active material was produced in the same manner as in Example 1-3 except for not subjecting to insertion of lithium into the particles of silicon compound. Then, the battery characteristics were evaluated in the same manner as in Example 1-3.

### (Example 1-6)

A negative electrode active material was produced in the same manner as in Example 1-3 except that the insertion amount of lithium into the particles of silicon compound was increased. Then, the battery characteristics were evaluated in the same manner as in Example 1-3. In this case, the amount of silicon per gram in the particles of silicon compound is decreased, so that the discharge capacity in the battery evaluation using the counter electrode Li is slightly lowered.

### (Example 1-7)

A negative electrode active material was produced in the same manner as in Example 1-1 except for changing the apparatus for producing the particles of silicon compound to the third apparatus shown in Fig. 6. At this time, the amount of oxygen of the silicon compound was also changed. The conditions for producing the particles of silicon compound are as follows.
Silicon: Metal silicon
Raw material which generates silicon oxide gas: Raw material in which metal silicon and silicon dioxide are mixed
Container: Crucible having outer wall made of carbon material
Atmosphere inside reaction furnace: Atmosphere of degree of vacuum of 5×10⁻² Pa
Heating method: Induction heating method
Heating temperature of container: 1,550°C

### (Example 1-8)

A negative electrode active material was prepared in the same manner as in Example 1-7 except for changing the amount of oxygen of the silicon compound to that as shown in Table 1. Then, the battery characteristics were evaluated in the same manner as in Example 1-7.

**[Table 1]**

| | SiOₓ x= | Discharge capacity (mAh/g) | Initial efficiency (%) | Deposition method | Capacity retention rate at 100 cycle | Li silicate |
|---|---|---|---|---|---|---|
| Comparative example 1-1 | 1.2 | 1,480 | 78 | Silicon oxide gas | 83 | Present |
| Comparative example 1-2 | 1.05 | 1,500 | 79 | Silicon oxide gas | 82.5 | Present |
| Example 1-1 | 0.95 | 1,550 | 80 | Silicon oxide gas + Silicon gas | 82.5 | Present |
| Example 1-2 | 0.8 | 1,710 | 80 | Silicon oxide gas + Silicon gas | 82 | Present |
| Example 1-3 | 0.72 | 1,870 | 80 | Silicon oxide gas + Silicon gas | 82 | Present |
| Example 1-4 | 0.6 | 2,033 | 81 | Silicon oxide gas + Silicon gas | 81 | Present |
| Example 1-5 | 0.5 | 2, 195 | 82 | Silicon oxide gas + Silicon gas | 80 | Present |
| Comparative example 1-3 | 0.39 | 2,425 | 83 | Silicon oxide gas + Silicon gas | 75 | Present |
| Comparative example 1-4 | 0.25 | 2,731 | 83 | Silicon oxide gas + Silicon gas | 71 | Present |
| Example 1-6 | 0.72 | 1,790 | 85 | Silicon oxide gas + Silicon gas | 83 | Present |
| Comparative example 1-5 | 0.72 | 1,940 | 71 | Silicon oxide gas + Silicon gas | 82 | None |
| Example 1-7 | 0.8 | 1, 720 | 80 | Silicon melt + raw material in which metal silicon and silicon dioxide was mixed | 82 | Present |
| Example 1-8 | 0.7 | 1,890 | 81 | Silicon melt + raw material in which metal silicon and silicon dioxide was mixed | 81 | Present |

It should be noted that examples 1-1 to 1-6 are outside the scope of the claims and are comparative examples. As shown in Example 1-1 to Example 1-6, it becomes possible to improve the discharge capacity by introducing a silicon gas into a silicon oxide gas (Si/SiO₂ mixed gas), and increasing the ratio of silicon in the active material. At this time, the gas rate of the silicon gas, which has the higher temperature at which the same vapor pressure as that of silicon oxide gas 100°C or more, was controlled by using an induction heating crucible and controlling the temperature of the crucible containing silicon to be higher than the temperature of the crucible containing the silicon oxide.

It has been known that silicon oxide also has good cycle characteristics at the time of the ratio of Si:O is about 1:1, but the capacity possessed by the silicon alone is lowered by containing oxygen. Although the cycle characteristics tend to gradually lower due to the presence of a large amount of silicon in the silicon oxide, the discharge capacity is markedly improved accordingly, so that when good characteristics of both of discharge capacity and cycle characteristics are considered to be satisfied, "x" of SiOₓ is required to be in the range of 0.5≤x<1.0.

As shown in Example 1-7 and Example 1-8, it is industrially possible to generate gas in one crucible by introducing granulated particles of Si/SiO₂ into molten silicon (molten Si), whereby productivity can be improved. Even when this method is employed, it is possible to make a predetermined bulk composition.

On the other hand, in Comparative Example 1-1 and Comparative Example 1-2 in which no silicon gas was mixed, "x" of SiOx could not be made less than 1, and the results of the discharge capacity was bad. On the other hand, in Comparative Example 1-3 and Comparative Example 1-4 in which "x" of SiOx is less than 0.5, the cycle characteristics were worsened.

It was also confirmed that the initial efficiency can be improved by using the oxidation-reduction method to generate Li silicate inside the bulk of the particles of silicon compound. On the other hand, the initial efficiency was lowered in Comparative Example 1-5 in which Li insertion was not carried out on the particles of silicon compound.

### (Example 2-1)

A negative electrode active material was produced in the same manner as in Example 1-1 except for changing the apparatus for producing the particles of silicon compound to the first apparatus shown in Fig. 4. At this time, an amount of oxygen of the silicon compound was also changed. The conditions for producing the particles of silicon compound are as follows.
Raw material which generates silicon oxide gas: Raw material in which metal silicon and silicon dioxide are mixed
Container: Crucible having outer wall made of carbon material
Atmosphere inside reaction furnace: 1×10⁻¹ Pa at the time of introducing reducing gas and 5×10⁻² Pa at ultimate vacuum degree
Heating method: Induction heating method
Heating temperature of container: 1,300°C
Reducing gas: H₂ gas
Temperature of reducing gas to be introduced: 1,300°C

### (Example 2-2 to Example 2-4)

A negative electrode active material was produced in the same manner as in Example 2-1 except for changing the kind of the reducing gas to those shown in Table 2. At this time, an amount of oxygen of the silicon compound was also changed. Then, the battery characteristics were evaluated in the same manner as in Example 2-1.

### (Example 2-5)

A negative electrode active material was produced in the same manner as in Example 2-1 except for changing the amount of oxygen of the silicon compound to that as shown in Table 2 (the amount of the reducing gas to be introduced was increased). Then, the battery characteristics were evaluated in the same manner as in Example 2-1.

### (Example 2-6)

A negative electrode active material was produced in the same manner as in Example 1-1 except that the second device shown in Fig. 5 further provided with a reducing gas introduction pipe 48 shown in Fig. 4 was used. Then, the battery characteristics were evaluated in the same manner as in Example 1-1. As the reducing gas, a H₂ gas was used, and the temperature of the reducing gas to be introduced was made 1,300°C. The atmosphere inside the reaction furnace was made 1×10⁻¹ Pa at the time of introduction of the reducing gas, and the ultimate vacuum degree was made 5×10⁻² Pa.

**[Table 2]**

| | SiOₓ x= | Discharge capacity (mAh/g) | Deposition method | Capacity retention rate at 100th cycle |
|---|---|---|---|---|
| Example 1-1 | 0.95 | 1,550 | Silicon oxide gas + Silicon gas | 82.5 |
| Example 2-1 | 0.94 | 1,560 | Silicon oxide gas + H₂ gas | 83 |
| Example 2-2 | 0.96 | 1,550 | Silicon oxide gas + CO gas | 83 |
| Example 2-3 | 0.95 | 1,560 | Silicon oxide gas + H₂S gas | 83 |
| Example 2-4 | 0.95 | 1,550 | Silicon oxide gas + SO₂ gas | 83 |
| Example 2-5 | 0.9 | 1,600 | Silicon oxide gas + H₂ gas | 83.5 |
| Example 2-6 | 0.7 | 1,900 | Silicon oxide gas + Silicon gas + H₂ gas | 81 |

It should be noted that examples 2-1 to 2-6 are outside the scope of the claims and are comparative examples. In Example 2-1 to Example 2-6, a reducing gas was introduced into a silicon oxide gas to change the ratio of silicon oxide. The reactivity of the silicon oxide gas is not so high so that the ratio cannot be changed drastically, but the battery capacity has improved. In the case where the reducing gas was introduced, the result of the capacity maintenance ratio at the 100th cycle was slightly better as compared with the case where the silicon gas was directly introduced. This is supposed that when the silicon gas is introduced, silicon grains are present relatively abundant and degradation of silicon is conspicuous. On the other hand, it is presumed that by using the reducing gas, only part of oxygen is removed from the silicon oxide, and grain growth of the silicon is not large.

### (Examples 3-1 to 3-6)

A negative electrode active material was prepared in the same manner as in Example 1-3 except that the median diameter of the particles of silicon compound was changed to those as shown in Table 3. Then, the battery characteristics were evaluated in the same manner as in Example 1-3.

**[Table 3]**

| | Median diameter (µm) | Capacity retention rate at 100th cycle |
|---|---|---|
| Example 1-3 | 7 | 82 |
| Example 3-1 | 1 | 78 |
| Example 3-2 | 3 | 79 |
| Example 3-3 | 5 | 80 |
| Example 3-4 | 10 | 81 |
| Example 3-5 | 12 | 80 |
| Example 3-6 | 15 | 78 |

It should be noted that examples 3-1 to 3-6 are outside the scope of the claims and are comparative examples. In Examples 3-1 to 3-6, the range where the cycle characteristics are most stabilized was investigated by changing the median diameter. When the median diameter of the particles of negative electrode active material is 3.0 µm or more, increase in the specific surface area can be suppressed, so that increase in the surface reaction accompanying the charge and discharge cycles can be suppressed, whereby the cycle characteristics are improved. On the other hand, when the median diameter of the particles of negative electrode active material is 12 µm or less, cracking of the active material accompanying charge and discharge can be prevented, and a newly formed surface is less likely formed so that the amount of the side reaction is lowered.

### (Example 4-1) It should be noted that example 4-1 is outside the scope of the claims and is a comparative example.

A negative electrode active material was prepared in the same manner as in Example 1-3 except that no carbon coating was carried out. Then, the battery characteristics were evaluated in the same manner as in Example 1-3.

**[Table 4]**

| | Presence or absence of carbon layer | Capacity retention rate at 100th cycle |
|---|---|---|
| Example 1-3 | Present | 82 |
| Example 4-1 | None | 80 |

When carbon coating was carried out as in Example 1-3, the conductive path was sufficient and the cycle characteristics tended to slightly increase.

It must be stated here that the present invention is not restricted to the embodiments shown by Examples. The embodiments shown by Examples are merely examples so that any embodiments composed of substantially the same technical concept as disclosed in the claims of the present invention and expressing a similar effect are included in the technical scope of the present claims.

## Claims

1. A method for producing a negative electrode active material which is a method for producing a negative electrode active material containing particles of negative electrode active material which contain particles of silicon compound, which comprises:
preparing a container in which silicon has been contained,
melting the silicon contained in the container to form a silicon melt,
generating a mixed gas in which a silicon gas and a silicon oxide gas are mixed by introducing a raw material which generates a silicon oxide gas into the silicon melt,
producing particles of silicon compound containing a silicon compound (SiOₓ: 0.5≤x<1.0) by solidifying and depositing the mixed gas on an adsorption plate, and
inserting lithium into the particles of silicon compound.

2. The method for producing a negative electrode active material according to claim 1, wherein the silicon oxide gas is generated in the presence of an inert gas or under reduced pressure.

3. A method for producing a negative electrode active material which comprises producing a negative electrode active material, wherein, when the negative electrode active material is used for a negative electrode of a secondary battery having metal lithium as a counter electrode, and 1.2 V constant current discharge is carried out after 0 V constant current and constant voltage charging of the secondary battery, an obtained discharge capacity is 1,550 mAh/g or more and 2,200 mAh/g or less, by the method for producing of the negative electrode active material according to claim 1 or 2.

4. A method for producing a non-aqueous electrolyte secondary battery which comprises producing a negative electrode using the negative electrode active material produced by the method for producing the negative electrode active material according to any one of claims 1 to 3, and producing a non-aqueous electrolyte secondary battery by using the produced negative electrode.

## Patentansprüche

1. Verfahren zur Herstellung eines aktiven Materials für eine negative Elektrode, das ein Verfahren zur Herstellung eines aktiven Materials für eine negative Elektrode ist, das Partikel eines aktiven Materials für eine negative Elektrode enthält, die Partikel einer Siliziumverbindung enthalten, welches umfasst:
Herstellen eines Behälters, in dem Silizium enthalten ist,
Schmelzen des in dem Behälter enthaltenen Siliziums, um eine Siliziumschmelze zu bilden,
Erzeugen eines Mischgases, in dem ein Siliziumgas und ein Siliziumoxidgas gemischt sind, durch Einbringen eines Rohstoffs, der ein Siliziumoxidgas erzeugt, in die Siliziumschmelze,
Herstellen von Partikel einer Siliziumverbindung, die eine Siliziumverbindung (SiOₓ: 0,5≤ x<1,0) enthalten, durch Verfestigen und Ablagern des Mischgases auf einer Adsorptionsplatte, und
Einbringen von Lithium in die Partikel der Siliziumverbindung.

2. Verfahren zur Herstellung eines aktiven Materials für eine negative Elektrode nach Anspruch 1, wobei das Siliciumoxidgas in Gegenwart eines Inertgases oder unter vermindertem Druck erzeugt wird.

3. Verfahren zur Herstellung eines aktiven Materials für eine negative Elektrode, das die Herstellung eines aktiven Materials für eine negative Elektrode umfasst, wobei, wenn das aktive Material für eine negative Elektrode für eine negative Elektrode einer Sekundärbatterie mit metallischem Lithium als Gegenelektrode verwendet wird und eine Entladung mit 1,2 V konstantem Strom nach einer Aufladung der Sekundärbatterie mit einem 0 V konstantem Strom und konstanter Spannung durchgeführt wird, eine erhaltene Entladekapazität 1,550 mAh/g oder mehr und 2,200 mAh/g oder weniger ist, durch das Verfahren zur Herstellung des aktiven Materials für eine negative Elektrode gemäß Anspruch 1 oder 2.

4. Verfahren zur Herstellung einer Sekundärbatterie mit nichtwässrigem Elektrolyt, das das Herstellen einer negativen Elektrode unter Verwendung des aktiven Materials für eine negative Elektrode, das durch das Verfahren zur Herstellung des aktiven Materials für eine negative Elektrode nach einem der Ansprüche 1 bis 3 hergestellt wurde, und das Herstellen einer Sekundärbatterie mit nichtwässrigem Elektrolyt unter Verwendung der hergestellten negativen Elektrode umfasst.

## Revendications

1. Procédé de production d'un matériau actif d'électrode négative qui est un procédé de production d'un matériau actif d'électrode négative contenant des particules de matériau actif d'électrode négative qui contiennent des particules de composé de silicium, qui comprend:
la préparation d'un récipient dans lequel du silicium a été contenu,
la fonte du silicium contenu dans le récipient pour obtenir du silicium fondu,
la génération d'un gaz mixte dans lequel un gaz de silicium et un gaz d'oxyde de silicium sont mélangés en introduisant une matière première qui génère un gaz d'oxyde de silicium dans le silicium fondu,
la production de particules de composé de silicium contenant un composé de silicium (SiOₓ: 0,5 ≤ x < 1,0) en solidifiant, et en déposant le gaz mélangé sur une plaque d'adsorption, et
l'incorporation du lithium dans les particules de composé de silicium.

2. Procédé de production d'un matériau actif d'électrode négative selon la revendication 1, dans lequel le gaz d'oxyde de silicium est généré en présence d'un gaz inerte ou sous pression réduite.

3. Procédé de production d'un matériau actif d'électrode négative qui consiste à produire un matériau actif d'électrode négative, dans lequel, lorsque le matériau actif d'électrode négative est utilisé pour une électrode négative d'une batterie secondaire se servant du lithium métallique comme contre-électrode, et que le procédé de production du matériau actif d'électrode négative effectue une décharge à courant constant de 1,2 V s'effectue après une charge à courant constant et tension constante de 0 V de la batterie secondaire, une capacité de décharge obtenue est supérieure ou égale à 1 550 mAh/g et inférieure ou égale à 2 200 mAh/g, selon la revendication 1 ou 2.

4. Procédé de production d'une batterie secondaire à électrolyte non aqueux qui consiste à produire une électrode négative au moyen du matériau actif d'électrode négative produit selon le procédé de production du matériau actif d'électrode négative selon l'une quelconque des revendications 1 à 3, et à produire une batterie secondaire à électrolyte non aqueux à l'aide de l'électrode négative produite.
